⑲ 〙 **Europäisches Patentamt**

**European Patent Office**

**Office européen des brevets**

(11) Veröffentlichungsnummer : **0 022 536**
**B1**

(12) **EUROPÄISCHE PATENTSCHRIFT**

(45) Veröffentlichungstag der Patentschrift :
**24.11.82**

(21) Anmeldenummer : **80103862.1**

(22) Anmeldetag : **07.07.80**

(51) Int. Cl.³ : **C 05 C   7/00, C 05 C   13/00**

(54) **Nichtbackender körniger Mineraldünger.**

(30) Priorität : **12.07.79 DE 2928143**

(43) Veröffentlichungstag der Anmeldung :
**21.01.81 (Patentblatt 81/03)**

(45) Bekanntmachung des Hinweises auf die Patenterteilung : **24.11.82 Patentblatt 82/47**

(84) Benannte Vertragsstaaten :
**AT BE FR GB IT NL**

(56) Entgegenhaltungen :
**DE A 1 592 768**
**DE A 2 340 638**
**DE A 2 531 962**
**DE A 2 702 284**
**DE C 219 932**
**FR A 2 190 774**

(73) Patentinhaber : **SKW Trostberg Aktiengesellschaft**
**Dr.-Albert-Frank-Strasse 32 Postfach 1150/1160**
**D-8223 Trostberg (DE)**

(72) Erfinder : **Lobitz, Fritz**
**Am Hang 27**
**D-8045 Ismaning (DE)**

(74) Vertreter : **Weickmann, Heinrich, Dipl.-Ing. et al.**
**Patentanwälte Dipl.-Ing. H. Weickmann Dipl.-Phys.Dr.**
**K. Fincke Dipl.-Ing. F.A. Weickmann Dipl.-Chem. B.**
**Huber Dr.-Ing. H. Liska Möhlstrasse 22**
**D-8000 München 86 (DE)**

Die Erfindung betrifft die Verhinderung des Zusammenbackens von Mineraldüngern auf Basis von Ammoniumsalzen.

Die Neigung von Ammoniumsalzen zum Verbacken durch den Einfluß der Luftfeuchtigkeit ist bekannt. Nachdem diese Salze vor allem in Form ihrer Sulfate, Nitrate und Phosphate in großem Maß Düngemittel Verwendung finden, hat es nicht an Versuchen gefehlt, gelagerte Dünger streufähig zu halten. Allgemein üblich ist dazu, diese Dünger in luftdichte Säcke abzupacken. Trotz dieser Maßnahme verklumpt der Inhalt nach längerem Lagern und läßt sich kaum noch verteilen. Als eine weitere Maßnahme wurde die Oberfläche jedes Düngerkorns nach dem Granulieren mit einem inerten Stoff, wie feinteiligem Talkum, Kieselgur und ähnlichem gepudert. Vor allem wird dadurch der direkte Kontakt der Körner untereinander vermieden und die Anbackneigung wesentlich verringert. Nachteilig ist dabei das Stauben der so behandelten Dünger beim Ausbringen durch überschüssigen Füllstoff.

Es ist auch bekannt, die Oberfläche der granulierten oder zu Kügelchen geformten Düngesalze mit einer Schutzhülle zu umgeben. So offenbart die DE-A-23 32 730 dafür organische Verbindungen, die einen stark verzweigten aliphatischen und wenigstens einen hydrophilen Rest aufweisen. Bekannt sind ferner Schutzhüllen aus im geschmolzenen Zustand aufgebrachtem Schwefel, aus feinverteiltem Schwefel, Wachs und/oder Öl als solche oder als Gemisch, wie in der DE-A-23 40 638 beschrieben wird.

Mit diesen bekannten Maßnahmen ist zwar eine Verbesserung der Lagerfähigkeit der Dünger zu erreichen. Bei den beschriebenen Überzügen handelt es sich jedoch um Substanzen, die in einem besonderen Arbeitsgang aufgebracht werden müssen.

Der Erfindung liegt daher die Aufgabe zugrunde, diesen Nachteil zu beseitigen und ein Verfahren zu entwickeln, das eine nachträgliche Behandlung der Düngemittelkörner in einem getrennten Arbeitsgang vermeidet und in wirtschaftlich interessanter Weise ein nichtbackendes körniges Düngemittel liefert.

Die Lösung dieser Aufgabe beruht auf der überraschenden Feststellung, daß ein Gehalt von 0,1 bis 10 Gew.-% Dicyandiamid bei im wesentlichen aus Ammonsalzen bestehenden Stickstoffdüngerkörnern ein Verbacken derselben verhindert. Dieser Effekt war völlig unvorhersehbar, da technisches Dicyandiamid an sich beim Lagern in Säcken oder im Silo bereits nach relativ kurzer Zeit stark zusammenbäckt und seine Fließfähigkeit praktisch völlig verliert.

Gegenstand der vorliegenden Erfindung ist ein nichtbakkender körniger Mineraldünger auf Basis von Ammoniumsalzen, wie Ammonsulfat, -nitrat oder -phosphat sowie Mischungen davon mit einem Gehalt an Dicyandiamid und gegebenenfalls weiteren Zusätzen, welcher gekennzeichnet ist durch einen Gehalt von 0,1 bis 10 Gew.-% Dicyandiamid, welches einer Schmelze oder granulierfähigen Lösung des Ammoniumsalzes vor deren Granulierung zugesetzt worden ist.

Ein Zusatz von Dicyandiamid zu Stickstoffdüngern war bisher nur als Nitrifikationshemmer bekannt. Dazu wurde das Dicyandiamid nach der DE-A-25 31 962 auf die Kornoberfläche des Düngers zusammen mit einem Haftvermittler und gegebenenfalls einem Emulgator aufgebracht, und nach der DE-A-27 02 284 einer Düngemittellösung zugegeben. Seine kornstabilisierende Wirkung wurde jedoch erst im Rahmen der vorliegenden Erfindung bemerkt.

Das Dicyandiamid liegt vorzugsweise gleichmäßig verteilt in den Körnern vor, es kann aber auch nahe der Kornoberfläche angereichert sein.

Eine Erklärung für die überraschende Wirkung des Dicyandiamids ist nicht eindeutig zu erbringen. Man kann jedoch annehmen, daß in den Granulaten Mischkristalle aus Ammonsalz und Dicyandiamid vorhanden sind, die unter dem Einfluß von Luftfeuchtigkeit weniger zur Rekristallisation neigen, so daß die Rieselfähigkeit des Düngers erhalten bleibt.

Die Erfindung ist grundsätzlich auf alle Dünger auf Basis von Ammoniumsalzen anwendbar, d.h. der Effekt des Nichtzusammenbackens der Düngemittelkörner durch einen Zusatz von Dicyandiamid, der vorzugsweise bei 4 bis 8 Gew.-%, bezogen auf das Gesamtgewicht des Düngers, liegt, tritt auch deutlich auf, wenn der Dünger noch weitere Zusätze enthält, z.B. bei zusätzlich Kalium- oder Magnesiumsalze enthaltenden Mischdüngern sowie bei solchen Düngern, die auch schwerlösliche Bestandteile enthalten. Im Rahmen der Erfindung wurden vor allem Ammonphosphat, Ammonnitrat und Ammonsulfat sowie deren Gemische untersucht. Die überraschende Wirkung des Dicyandiamids als ein das Zusammenbacken verhinderndes Mittel wird ferner an handelsüblichen NP- und NPK-Düngern demonstriert.

Die Einverleibung des Dicyandiamids erfolgt vorzugsweise durch Zugabe in fester Form zu einer wasserhaltigen Schmelze eines Ammonsalzes oder eines Gemisches von Ammonsalzen und anschließende Granulation der Schmelze. Es ist jedoch auch möglich, das Dicyandiamid dem festen Ammonsalz vor dem Granulieren und Trocknen in fester oder gelöster Form zuzusetzen.

Die nachfolgend angeführten Beispiele sollen die Erfindung näher erläutern, ohne sie jedoch darauf zu beschränken.

Beispiel 1

. Eine Mischung aus 60 Gew.-Teilen Ammonsulfat und 40 Gew.-Teilen Ammonnitrat wird mit so viel Wasser vermischt, daß sie bei 80 °C schmilzt. Darin werden 4 Gew.-Teile Dicyandiamid gelöst und anschließend die Schmelze granuliert.

Eine Petrischale wird 1 cm hoch mit dem Granulat gefüllt und 4 Wochen frei dem Zutritt der Luftfeuchtigkeit ausgesetzt. Als Vergleichssubstanz dienten Granulate einer Ammonsulfat-Ammonnitrat-Mischung, die analog der oben genannten Vorschrift, jedoch ohne Dicyandiamidzusatz, hergestellt worden waren. Nach Ablauf der genannten 4 Wochen waren die Granalien ohne Dicyandiamidzusatz fest verbacken, während diejenigen mit Dicyandiamidzusatz noch völlig freifließend waren.

Beispiel 2

Ein handelsüblicher NP-Dünger 20/20 (Ammonnitrat/Ammonphosphat) wurde mit 8 Gew.-% Dicyandiamid vermischt, granuliert und getrocknet. Das Granulat wurde in einem Schnelltest bei Raumtemperatur einer Atmosphäre mit schwankendem Feuchtigkeitsgehalt ausgesetzt.

Als Vergleichsversuch wurde eine Menge desselben NP-Düngers ohne Zusatz von Dicyandiamid in gleicher Weise behandelt.

Bei den dicyandiamidhaltigen Lagerproben war die Neigung zum Verbacken deutlich herabgesetzt.

Ein analoges Ergebnis erhält man auch bei Verwendung eines handelsüblichen NPK-Düngers 15/15/15, das ist ein entsprechend zusammengesetztes Gemisch aus Ammonnitrat, Di- und Monoammonphosphat, Dicalciumphosphat und Kaliumchlorid.

Beispiel 3

Handelsübliches Ammonnitrat wurde mit 5 Gew.-% Dicyandiamid vermischt, aufgeschmolzen und geprillt. Das Granulat wurde in einem Schnelltest bei Raumtemperatur einer Atmosphäre mit schwankendem Feuchtigkeitsgehalt ausgesetzt.

Als Vergleichsversuch wurde eine Menge des Ammonnitrats ohne Zusatz von Dicyandiamid geprillt und in gleicher Weise behandelt.

Bei den dicyandiamidhaltigen Lagerproben war die Neigung zum Verbacken deutlich herabgesetzt.

**Ansprüche**

1. Nichtbackender körniger Mineraldünger auf Basis von Ammoniumsalzen, wie Ammonsulfat, -nitrat oder -phosphat sowie Mischungen davon mit einem Gehalt an Dicyandiamid und gegebenenfalls weiteren Zusätzen, gekennzeichnet durch einen Gehalt von 0,1 bis 10 Gew.-% Dicyandiamid, welches einer Schmelze oder granulierfähigen Lösung des Ammoniumsalzes vor deren Granulierung zugesetzt worden ist.

2. Mineraldünger nach Anspruch 1, dadurch gekennzeichnet, daß er zusätzlich Calciumcarbonat und/oder Kalisalze und/oder Magnesiumsalze enthält.

3. Mineraldünger nach Anspruch 1 und 2, dadurch gekennzeichnet, daß er 4 bis 8 Gew.% Dicyandiamid enthält.

**Claims**

1. A non-caking, granular mineral fertiliser based on ammonium salts, such as ammonium sulphate, nitrate or phosphate, as well as mixtures thereof, with a content of dicyandiamide and possibly further additives, characterised by a content of from 0.1 to 10 wt.% of dicyandiamide which has been added to a melt or granulatable solution of the ammonium salt before its granulation.

2. Mineral fertiliser according to claim 1, characterised in that it additionally contains calcium carbonate and/or potassium salts and/or magnesium salts.

3. Mineral fertiliser according to claim 1 or 2, characterised in that it contains 4 to 8 wt.% of dicyandiamide.

**Revendications**

1. Engrais minéral granulé ne s'agglomérant pas à base de sels d'ammonium, tels que sulfate, nitrate ou phosphate d'ammonium ainsi que des mélanges de ceux-ci, présentant une certaine teneur en dicyanodiamide et éventuellement en d'autres additifs, caractérisé par une teneur de 0,1 à 10 % en poids en dicyanodiamide, celui-ci ayant été ajouté à une masse fondue ou à une solution susceptible d'être granulée du sel d'ammonium avant sa granulation.

2. Engrais minéral selon la revendication 1, caractérisé en ce qu'il contient en outre du carbonate de calcium et/ou des sels de potassium et/ou des sels de magnésium.

3. Engrais minéral selon la revendication 1 ou 2, caractérisé en ce qu'il contient de 4 à 8 % en poids de dicyanodiamide.